(19) Europäisches Patentamt
European Patent Office
Office européen des brevets

(11) **EP 3 724 266 B1**

(12) **FASCICULE DE BREVET EUROPEEN**

(45) Date de publication et mention
de la délivrance du brevet:
**02.02.2022   Bulletin 2022/05**

(21) Numéro de dépôt: **18833693.7**

(22) Date de dépôt: **13.12.2018**

(51) Classification Internationale des Brevets (IPC):
**C08L 7/00** *(2006.01)*       **B60C 1/00** *(2006.01)*
**C08L 9/06** *(2006.01)*       **C08L 21/00** *(2006.01)*

(52) Classification Coopérative des Brevets (CPC):
**B60C 1/0016; C08L 7/00; C08L 9/06; C08L 21/00;**
B60C 2200/02

(86) Numéro de dépôt international:
**PCT/FR2018/053264**

(87) Numéro de publication internationale:
**WO 2019/115955 (20.06.2019 Gazette 2019/25)**

(54) **PNEUMATIQUE D'AVION**

AIRCRAFT TIRE

FLUGZEUGREIFEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **14.12.2017  FR 1762103**

(43) Date de publication de la demande:
**21.10.2020   Bulletin 2020/43**

(73) Titulaire: **COMPAGNIE GENERALE DES
ETABLISSEMENTS MICHELIN
63000 Clermont-Ferrand (FR)**

(72) Inventeurs:
• **CABIOCH, Jean-Luc
63040 CLERMONT-FERRAND CEDEX 9 (FR)**
• **DE GAUDEMARIS, Benoît
63040 CLERMONT-FERRAND CEDEX 9 (FR)**

(74) Mandataire: **Sidhu, Alban
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**WO-A1-2016/043851     WO-A1-2016/053541**

**Description**

La présente invention est relative aux pneumatiques destinés à équiper des avions et présentant une résistance aux coupures en chevron améliorée, notamment lors de la phase d'atterrissage.

De manière connue, un pneumatique d'avion doit résister aux conditions d'usure très particulières des pneumatiques d'avion. En effet ces pneumatiques sont soumis à de très grandes variations de température et de vitesse, en particulier à l'atterrissage où ils doivent passer d'une vitesse nulle à une très grande vitesse, provoquant un échauffement et une usure considérables. Ces conditions d'usure particulières ne concernent pas d'autres types de pneumatiques tels que les pneumatiques de véhicules de tourisme, poids lourds, génie civil ou hors la route.

En particulier, un pneumatique avion est soumis à de fortes sollicitations lors des phases d'atterrissage (Touch Down). Sur certains revêtements les atterrissages peuvent entraîner des coupures dites en chevron, ou en V (en anglais « chevron cutting »). Ces coupures en chevron peuvent intervenir dès les premiers atterrissages selon l'agressivité du revêtement de la piste.

Il est connu d'utiliser dans les bandes de roulement de pneumatique d'avion, des compositions de caoutchouc à base de caoutchouc naturel et de noir de carbone, ces deux éléments principaux permettant d'obtenir des compositions possédant des propriétés compatibles avec les conditions d'usage d'un pneumatique d'avion. En plus de ces éléments principaux, ces compositions comprennent les additifs usuels de ce type de compositions tels qu'un système de vulcanisation et des agents de protections. De telles compositions de bande de roulement de pneumatique d'avion sont utilisées depuis de nombreuses années et présentent des propriétés mécaniques satisfaisantes.

Egalement, le document WO2017/017123 décrit un pneu d'avion dont la bande de roulement présente une composition comprenant un coupage d'élastomères spécifiques, en vue d'améliorer l'usure engendrée à l'atterrissage.

Néanmoins, il demeure intéressant pour les industriels du pneumatique de trouver des solutions pour les pneumatiques d'avion, permettant d'améliorer les propriétés de résistance à la déchirabilité (coupure en chevron), et ce à la fois à basse température et à haute température.

De plus, il est toujours intéressant pour les manufacturiers de trouver des compositions permettant une production facilitée des pneumatiques notamment par une viscosité diminuée des compositions avant cuisson.

C'est dans ce cadre que la demanderesse a trouvé que des compositions particulières des bandes de roulement de pneumatique d'avion pouvaient améliorer les propriétés des pneumatiques d'avion, en particulier leur résistance à la coupure en chevron, tout en augmentant le temps de fixation de ces compositions.

En conséquence, l'invention concerne un pneumatique d'avion dont la bande de roulement comprend une composition à base d'au moins une matrice élastomérique comprenant de 20 à 100 pce d'élastomère isoprénique et de 0 à 80 pce d'un copolymère de butadiène et de styrène ; une charge renforçante comprenant majoritairement du noir de carbone ; de 1 à 30 pce d'au moins une résine hydrocarbonée majoritairement composée d'unités issues de monomères aromatiques et cycloaliphatiques, ladite résine présentant un taux de proton aromatique compris entre 0 et 12%, un taux de proton éthylénique supérieur à 3%, une masse moyenne moléculaire en nombre supérieure à 500 g/mol et un indice de polymolécularité supérieur à 2; et un système de réticulation.

## I. DESCRIPTION DETAILLEE DE L'INVENTION

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Par ailleurs, le terme « pce » signifie au sens de la présente demande de brevet, partie en poids pour cent parties d'élastomères, de manière bien connue de l'homme du métier.

Dans la présente, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

De même, lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère). Ainsi, par exemple, une résine majoritairement composée d'unités issues de monomères en dicyclopentadiène et aromatique est une résine dans laquelle les unités dicyclopendadiène ajoutées aux unités aromatiques représentent la plus grande quantité en masse, parmi toutes les unités composant ladite résine. Dit autrement, un monomère « majoritaire » ou un ensemble de monomères « majoritaires », est un monomère (ou un ensemble de monomères) qui représente la fraction massique la plus grande dans le polymère. Au contraire, un monomère « minoritaire » est un monomère qui ne représente pas la fraction molaire la plus grande dans le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Sauf indications contraires, les composants décrits dans la présente font partie de la composition de la bande de roulement du pneumatique d'avion selon la présente invention. Leurs taux d'incorporation respectifs correspondent à leurs taux dans la composition de bande de roulement du pneumatique d'avion selon la présente invention.

Le pneumatique d'avion de l'invention présente une bande de roulement comprenant une composition à base d'au moins une matrice élastomérique comprenant de 20 à 100 pce d'élastomère isoprénique et de 0 à 80 pce d'un copolymère de butadiène et de styrène ; une charge renforçante comprenant majoritairement du noir de carbone ; de 1 à 30 pce d'au moins une résine hydrocarbonée majoritairement composée d'unités issues de monomères aromatiques et cycloaliphatiques, ladite résine présentant un taux de proton aromatique compris entre 0 et 12%, un taux de proton éthylénique supérieur à 3%, une masse moyenne moléculaire en nombre supérieure à 500 g/mol et un indice de polymolécularité supérieur à 2; et un système de réticulation.

## Matrice élastomérique

Selon l'invention, la matrice élastomérique comprend de 20 à 100 pce d'élastomère isoprénique et de 0 à 80 pce d'un copolymère de butadiène et de styrène.

Les élastomères isopréniques et copolymères de butadiène et de styrène sont des élastomères diéniques bien connus de l'homme du métier.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse, de préférence du caoutchouc naturel. Par exemple, le polyisoprène de synthèse, peut être un polyisoprène ayant un taux (% molaire) de liaisons cis-1,4 supérieur à 90%, plus préférentiellement encore supérieur à 98%.

Les élastomères utilisés dans le cadre de la présente invention peuvent être par exemple à blocs, statistiques, séquencés, microséquencés, et être préparés en dispersion ou en solution; ils peuvent être couplés et/ou étoilés et/ou fonctionnalisés avec un agent de couplage et/ou d'étoilage et/ou de fonctionnalisation.

L'élastomère isoprénique peut être choisi dans le groupe comprenant le caoutchouc naturel, le polyisoprène synthétique et leur mélange. De préférence, l'élastomère isoprénique est du caoutchouc naturel.

Au sens de la présente invention on appelle copolymère de butadiène et de styrène tout copolymère obtenu par copolymérisation d'un ou plusieurs butadiène(s) avec un ou plusieurs styrènes. Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

De préférence, le copolymère de butadiène et de styrène est fonctionnalisé à l'étain (Sn), c'est-à-dire comporte des liaisons C-Sn (appelée aussi fonctionnalisation Sn). Il peut être fonctionnalisé simplement (liaisons C-Sn en bout de chaîne) et/ou couplé (atome Sn entre deux chaînes) et/ou étoilé (atome Sn entre 3 chaînes ou plus) avec un agent de fonctionnalisation et/ou de couplage et/ou d'étoilage. De manière générique on parle pour rassembler tous ces élastomères liés à de l'étain, d'élastomères fonctionnalisés à l'étain. Ces élastomères sont connus de l'homme du métier, par exemple ceux décrits dans le document WO 2011/042507.

L'homme du métier connait bien les agents de fonctionnalisation et/ou de couplage et/ou d'étoilage utilisable dans le cadre de la présente invention. A titre d'exemple d'agent de fonctionnalisation, on peut citer les agents de fonctionnalisation dérivés de l'étain pouvant répondre à la formule générale $(X^1_1R^1_2Sn)-O-(SnR^1_{3-y}X^1_y)$ ou $(X^1_1 R^1_2Sn)-O-(CH2)_n-O-(SnR^1_{3-y}X^1_y)$, où y représente un entier de valeur 0 ou 1, $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et n représente un entier de 1 à 20, de préférence 4. Par ailleurs, à titre d'agents de couplage ou d'étoilage à l'étain, on peut citer les dérivés de l'étain de formule $SnRxX_{4-x}$, x représentant un nombre entier de valeur 0 à 2, R représentant un radical alkyle, cycloalkyle, aryle, alkaryle, aralkyle, vinyle ayant de 1 à 10 atomes de carbone, de préférence un radical alkyle ayant de 1 à 4 atomes de carbone, et X est un atome d'halogène, de préférence le chlore. A titre de dérivés de l'étain préférentiels, on peut citer le dichlorure de dibutyl étain ou encore tétrachlorure d'étain, ce dernier étant tout particulièrement préféré.

Le copolymère de butadiène et de styrène fonctionnalisé à l'étain, peut être obtenu de manière connue en soi par réaction d'un dérivé de l'étain sur le copolymère de butadiène et de styrène. La préparation d'un élastomère diénique étoilé est par exemple décrit dans le brevet US 3,393,182.

D'autres types de fonctionnalisation existent pour les copolymères de butadiène et de styrène, tels que des groupes fonctionnels silanol ou polysiloxane ayant une extrémité silanol, ou bien les copolymères styréniques et butadièniques époxydés. De telles fonctionnalisations sont également possibles dans le cadre de la présente invention.

Le copolymère de butadiène et de styrène est préférentiellement un copolymère statistique de butadiène-styrène (SBR). Il peut s'agir par exemple d'un SBR préparé en émulsion ("ESBR") ou d'un SBR préparé en solution ("SSBR"). Les teneurs en liaisons vinyliques (-1,2), trans-1,4 et cis-1,4 de la partie butadiénique du SBR peuvent être variables. Par exemple, la teneur en vinyle peut être comprise entre 15% et 80% (% molaire), la teneur en liaisons trans-1,4 comprise entre 15% et 80% (% molaire).

De préférence, le copolymère de butadiène et de styrène est un copolymère de butadiène et de styrène à faible taux de styrène. Le taux de styrène peut être préférentiellement compris dans un domaine allant de 5 à 25%, de préférence de 5 à 20%, de préférence encore de 10 à 19%.

De préférence, selon l'invention, le taux d'élastomère isoprénique peut être compris dans un domaine allant de 30 à 100 pce, par exemple de 30 à 70 ou de 70 à 100 pce ; tandis que le taux de copolymère de de butadiène et de styrène est compris dans un domaine allant de 0 à 70 pce, par exemple de 0 à 30 pce ou de 30 à 70 pce.

Dans un mode de réalisation préféré de la présente invention, le taux total d'élastomère isoprénique et de copolymère de butadiène et de styrène est compris dans un domaine allant de 50 à 100 pce, de préférence de 75 à 100 pce.

Plus préférentiellement, le taux total d'élastomère isoprénique et de copolymère de butadiène et de styrène est de 100 pce. En d'autres termes, selon ce mode de réalisation, la matrice élastomérique de la composition de la bande de roulement du pneumatique d'avion selon l'invention comprend exclusivement de l'élastomère isoprénique et du copolymère de butadiène et de styrène.

Dans les cas où le taux total d'élastomère isoprénique et de copolymère de butadiène et de styrène est différent de 100 pce, l'invention comprend un autre élastomère en plus de l'élastomère isoprénique et du copolymère de butadiène et de styrène. A ce titre, tout type d'élastomère connu de l'homme de l'art est utilisable, et notamment du polybutadiène, préférentiellement à forte teneur en liaison cis-1,4.

Charge renforçante

Selon l'invention, composition de la bande de roulement du pneumatique d'avion comprend une charge renforçante comprenant majoritairement du noir de carbone.

On peut utiliser tout type noir de carbone connu pour ses capacités à renforcer une composition de caoutchouc utilisable pour la fabrication de pneumatiques d'avion.

Comme noirs de carbone conviennent tous les noirs de carbone conventionnellement utilisés dans les pneumatiques (noirs dits de grade pneumatique). Par exemple, on citera plus particulièrement les noirs de carbone renforçants de grade ASTM N326, N330, N339, N347, N375, ou encore, selon les applications visées, les noirs de séries plus élevées (par exemple N550, N660, N683, N772), voire même N990.

Les noirs de carbone peuvent être par exemple déjà incorporés à l'élastomère isoprénique sous la forme d'un masterbatch (voir par exemple demandes WO 97/36724 ou WO 99/16600).

De préférence pour l'invention, on peut utiliser un noir de carbone de haute surface spécifique. On entend ici par surface spécifique la surface spécifique BET mesurée selon la norme ASTM D6556-09 [méthode multipoints (5points)-gaz : azote- domaine de pression relative P/P0 : 0.05 à 0.30].

Ainsi, pour les besoins de l'invention, dans la composition comprend majoritairement du noir de carbone présentant une surface spécifique supérieure à $80 m^2/g$, de préférence supérieure à $100 m^2/g$. Ces noirs de carbone sont notamment et préférentiellement ceux des séries 100 et 200 dans les grades ASTM.

De préférence dans la composition de la bande de roulement du pneumatique d'avion de l'invention, la quantité de noir de carbone est comprise dans un domaine allant de 20 à 100 pce, de préférence de 30 à 70 pce, plus préférentiellement de 40 à 60 pce.

Selon un mode de réalisation de l'invention, la charge renforçante est constituée de noir de carbone, c'est-à-dire que le noir de carbone est la seule charge renforçante dans la composition de la bande de roulement du pneumatique d'avion.

Alternativement et de préférence également, à titre complémentaire, la composition du flanc externe du pneumatique de l'invention peut comprendre une autre charge renforçante, de préférence à un taux total inférieur à 20 pce, plus préférentiellement inférieur à 15 pce.

A ce titre conviennent notamment les charges organiques autres que le noir de carbone et les charges inorganiques renforçantes. Comme exemples de charges organiques autres que des noirs de carbone, on peut citer les charges organiques de polyvinylaromatique fonctionnalisé telles que décrites dans les demandes WO-A-2006/069792 et WO-A-2006/069793. Comme charges inorganiques renforçantes conviennent notamment des charges minérales du type siliceux, en particulier de la silice (SiO2), ou du type alumineux, en particulier de l'alumine (Al203).

La silice éventuellement utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Selon un mode préférentiel de réalisation de l'invention, la composition comprend en complément du noir de carbone, de 1 à 20 pce de silice, préférentiellement de 2 à 8 pce. Egalement dans ce mode préféré, la composition comprend de préférence 0,1 à 2 pce d'un agent de couplage, de préférence de 0,2 à 1,6 pce.

Résine plastifiante

Selon l'invention, composition de la bande de roulement du pneumatique d'avion comprend de 1 à 30 pce d'une résine plastifiante majoritairement composée d'unités issues de monomères aromatiques et cycloaliphatiques, cette résine présentant un taux de proton aromatique compris entre 0 et 12%, un taux de proton éthylénique supérieur à 3%, une masse moyenne moléculaire en nombre supérieure à 500 g/mol et un indice de polymolécularité supérieur à 2. Cette résine est également appelée résine aromatique / cycloaliphatique dans ce qui suit.

Les résines plastifiantes en général, sont connues de l'homme du métier. Elles sont aussi parfois appelées résines hydrocarbonées ou résines de haute température de transition vitreuse.

De manière connue de l'homme du métier, la dénomination "résine plastifiante" est réservée dans la présente demande, par définition, à un composé qui est solide à température ambiante (23°C) (par opposition à un composé plastifiant liquide tel qu'une huile).

Les résines hydrocarbonées sont des polymères bien connus de l'homme du métier, miscibles par nature dans les compositions d'élastomère(s) diénique(s) lorsqu'elles sont qualifiées en outre de "plastifiantes". Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène, mais peuvent aussi comporter une part d'hétéroatomes et notamment d'atomes d'oxygène selon les monomères entrants dans leur constitution.

La résine spécifique pour l'invention est majoritairement composée d'unités issues de monomères aromatiques et cycloaliphatiques.

A titre de monomères cycloaliphatiques on entend selon la présente invention et de manière conventionnelle pour l'homme du métier, les monomères cycliques saturés et on choisira de préférence les monomères dans le groupe constitué par le cyclopentadiène (en abrégé CPD), le dicyclopentadiène (en abrégé DCPD), les dérivés substitués de ces monomères, comme le méthylcyclopentadiene (en abrégé MCPD) et leurs mélanges. Plus préférentiellement, les monomères cycloaliphatiques sont choisis dans le groupe constitué par le cyclopentadiène (en abrégé CPD), le dicyclopentadiène (en abrégé DCPD), le méthylcyclopentadiène (en abrégé MCPD) et leurs mélanges.

A titre de monomères aromatiques, on choisira préférentiellement les monomères issus d'une coupe pétrolière C9, préférentiellement ceux choisis dans le groupe constitué par le styrène, l'alpha-méthyl styrène, le vinyl toluène, l'indène et leurs mélanges.

Ainsi, de préférence, la résine hydrocarbonée majoritairement composée d'unités issues de monomères aromatiques et cycloaliphatiques est telle que les monomères cycloaliphatiques sont choisis dans le groupe constitué par le cyclopentadiène, le dicyclopentadiène, le méthylcyclopentadiène et leurs mélanges, et les monomères aromatiques sont choisis dans le groupe constitué par le styrène, l'alpha-méthyl styrène, le vinyle toluène, l'indène et leurs mélanges.

La résine utile aux besoins de l'invention, majoritairement composée d'unités issues de monomères aromatiques et cycloaliphatiques, peut comprendre, en plus de ces unités, et à titre minoritaire, des unités aliphatiques, c'est-à-dire à base de monomères aliphatiques, autres que les monomères cycloaliphatiques. A ce titre, la résine peut comprendre, à titre minoritaire, des unités issues de monomères oléfiniques. De la même manière, la résine peut aussi comprendre des unités provenant des dérivés du pin, préférentiellement choisies dans le groupe constitués par l'alphapinène, le betapinène, la colophane, la térébenthine, le tallol et leurs mélanges. La résine peut optionnellement être modifiée par de l'anhydride maléique.

La résine aromatique / cycloaliphatique présente un taux de proton aromatique compris entre 0 et 12%, de préférence un taux de proton aromatique compris dans un domaine allant de 1 à 10%, de préférence de 2 à 7%.

La résine aromatique / cycloaliphatique présente un taux de proton éthylénique supérieur à 3%, de préférence un taux de proton éthylénique compris dans un domaine allant de 3 à 7%.

Selon un mode de réalisation préférentiel, la résine hydrocarbonée utile aux besoins de l'invention présente une température de transition vitreuse (Tg) comprise dans un domaine allant de 30°C à 150°C, de préférence de 30 à 120°C.

La résine hydrocarbonée utile aux besoins de l'invention présente une masse moléculaire moyenne en nombre (Mn) supérieure à 500 g/mol, de préférence comprise dans un domaine allant de 500 g/mol à 1500g/mol et de préférence de 500 à 1000g/mol.

La résine hydrocarbonée utile aux besoins de l'invention présente un indice de polymolécularité (Ip) supérieur à 2, de préférence compris dans un domaine allant de 2 à 5, et préférentiellement de 3 à 4,5.

Selon un mode de réalisation préférentiel de l'invention, la résine hydrocarbonée majoritairement composée d'unités issues de monomères aromatiques et cycloaliphatiques, comprend en outre des unités provenant des dérivés du pin, préférentiellement choisies dans le groupe constitués par l'alphapinène, le betapinène, la colophane, la térébenthine, le tallol et leurs mélanges. Selon ce mode préférentiel, la résine est aussi préférentiellement modifiée par de l'anhydride maléique.

Dans le commerce, il existe de nombreuses résines hydrocarbonées disponibles. Ces résines peuvent présenter des caractéristiques, notamment de composition chimique, de Tg, de Mn, de taux de proton aromatique, éthylénique ou encore d'Ip qui diffèrent selon les fournisseurs.

A titre d'exemples de résines plastifiantes aromatiques / cycloaliphatiques on peut citer notamment des résines commerciales «Novares TC160» (Mn=710g/mol ; Mw=2000g/mol ; Ip=2,8, Tg=106°C), «Novares TC100» (Mn=460g/mol ; Mw=840g/mol ; Ip=1,8, Tg=42°C) commercialisées par la société Rütgers, qui ne sont pas conformes pour les besoins de l'invention.

A titre de résine applicable à l'invention, majoritairement composée d'unités issues de monomères aromatiques et cycloaliphatiques, on peut citer la résine « LX-1035 », (Mn=820g/mol, 7% de protons aromatiques, 5% de protons éthyléniques et 88% de protons aliphatiques, Ip=3,9) ou encore la résine « Nevroz 1420 » (comprenant en plus des monomères aromatiques et cycloaliphatiques unités provenant des dérivés du pin, Mn=910g/mol, 3% de protons aromatiques, 5% de protons éthyléniques et 92% de protons aliphatiques, Ip=3,9), ces deux résines étant commercialisées par la société Neville.

La température de transition vitreuse Tg est mesurée de manière connue par DSC *(Differential Scanning Calorimetry),* selon la norme ASTM D3418 (1999).

La macrostructure (Mw, Mn, Ip et Mz) de la résine hydrocarbonée est déterminée par chromatographie d'exclusion stérique (SEC) sur la base des normes ISO 16014 (Détermination of average molecular mass and molecular mass distribution of polymers using size exclusion chromatography), ASTM D5296 (Molecular Weight Averages and molecular weight distribution of polystyrene by High performance size exclusion chromatography), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynome d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en log de M entre chaque.

On peut utiliser des kits étalons certifiés (ISO 13885 et DIN 55672) comme par exemple les kits de vials de la société PSS (polymer standard service, référence PSS-pskitr1l-3), ainsi qu'un PS étalon supplémentaire de Mp = 162 g/mol (Interchim, référence 178952).

Ces kits se présentent sous la forme de 3 vials contenant chacun une famille de polystyrène étalons dans des quantités adaptées :

- Vial noir: Mp = 1 220, 4 850, 15 500 et 67 500 g/mol.
- Vial bleu : Mp = 376, 3 470, 10 400, 46 000 g/mol.
- Vial jaune : Mp = 266, 1 920, 7 200, 28 000 g/mol.
- PS162 : Mp = 162 g/mol.

Les masses molaires moyennes en nombre (Mn), en masse (Mw), la Mz, et la polydispersité de la résine analysée sont calculées à partir de cette courbe d'étalonnage. C'est pourquoi, on parle de masses molaires relatives à un étalonnage polystyrène.

Pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que: Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$Mz = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

dans lesquelles Ai est l'amplitude du signal du détecteur refractométrique correspondant à la masse Mi et au temps d'élution ti.

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

| Numéro | Marque | Domaine de masses molaires (g/mol) | Longueur (mm) | Diamètre interne (mm) | Taille des particules ($\mu m$) | Désignation commerciale | Références (à titre indicatif) |
|---|---|---|---|---|---|---|---|
| Colonnes 1 et 2 | Polymer La boratories | 200-400000 | 300 | 7,5 | 5 | MIXED-D | PL1110-6504 |
| Colonnes 3 et 4 | Polymer La boratories | 200-30000 | 300 | 7,5 | 3 | MIXED-E | PL1110-6300 |

8

Le taux de proton aromatique (%HA) et le taux de proton éthylénique (%HE) sont mesurés par RMN 1H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl3) à raison d'environ 10mg de résine dans environ 1mL de solvant. Les spectres sont acquis sur un spectromètre Avance 500 MHz Bruker équipé d'une sonde "large bande" BBO z-grad 5 mm Bruker. L'expérience RMN 1H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; $\delta$ppm 1H à 7,20 ppm. Les signaux RMN 1H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

Le taux de résine aromatique / cycloaliphatique est préférentiellement compris dans un domaine allant de 2 à 30 pce, plus préférentiellement de 2 à 15 pce.

En dessous du minimum indiqué, l'effet technique visé peut s'avérer insuffisant, alors qu'au-delà de la limite supérieure, le compromis de propriétés visé pour la composition de caoutchouc considérée n'est plus atteint.

De préférence pour l'invention, la composition de la bande de roulement du pneumatique d'avion de l'invention ne comprend pas d'autre résine que la résine spécifique décrite ci-dessus.

Alternativement, la composition peut comprendre en complément un autre plastifiant, telle qu'une autre résine plastifiante et/ou une huile plastifiante à un taux inférieur ou égal à 15 pce, de préférence inférieur ou égal à 10 pce.

Système de réticulation

Selon l'invention, composition de la bande de roulement du pneumatique d'avion comprend un système de réticulation.

Le système de réticulation peut être à base soit de soufre, soit de donneurs de soufre et/ou de peroxyde et/ou de bismaléimides. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre peut être utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

Additifs divers

La composition de caoutchouc peut comporter également tout ou partie des additifs usuels habituellement utilisés dans les compositions d'élastomères destinées à constituer des bandes de roulement, comme par exemple des résines renforçantes, des pigments, des agents de protection tels que cires anti-ozone, anti-ozonants chimiques, antioxydants, des agents antifatigue.

Pneumatiques d'avion

La présente invention est relative à des pneumatiques destinés à équiper des avions. Les pneumatiques d'avion sont soumis à des contraintes bien spécifiques liées à leur utilisation et présentent certaines distinctions par rapport à d'autres types de pneumatiques tels que les pneumatiques de véhicules de tourisme, poids lourds, génie civil ou hors la route.

De façon générale, un pneumatique comprend une bande de roulement, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique d'avion comprend généralement une pluralité de nappes de carcasse (ou nappes carcasse ou couches de carcasse) s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Selon l'invention, le pneumatique peut comprendre un nombre de couches carcasse allant de 2 à 12, de préférence de 5 à 10.

Les éléments de renforcement des couches de carcasse sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

En utilisation, un pneumatique d'avion est soumis à une combinaison de charge et de pression induisant un taux de flexion élevé, typiquement supérieur à 30% (par exemple à 32% ou 35%). Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique d'avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Ainsi, selon l'invention, le pneumatique peut avoir une pression de gonflage supérieure à 9 bars, de préférence de 9 à 20 bars.

Les pneumatiques d'avion selon la présente invention peuvent être utilisés sur tout type d'avion. Ils sont particulièrement intéressants pour les avions utilisant des pneumatiques à grandes dimensions. En effet, plus la dimension d'un pneumatique d'avion est importante plus l'impact de l'usure à l'atterrissage sur l'usure globale du pneumatique sera important. Ainsi, selon l'invention, le pneumatique peut avoir une dimension supérieure à 18 pouces, de préférence de 20 à 23 pouces.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Ainsi, le pneumatique d'avion selon l'invention est préférentiellement un pneumatique d'avion qui est soumis lors de son utilisation à une combinaison de charge et de pression induisant un taux de flexion supérieur à 30.

De même, le pneumatique d'avion selon l'invention est préférentiellement un pneumatique d'avion comprenant en plus de la bande de roulement, une structure interne comprenant une pluralité de couches de carcasse s'étendant entre les deux bourrelets et réparties entre une première et une deuxième famille, la première famille étant constituée par des couches de carcasse, s'enroulant, dans chaque bourrelet, de l'intérieur vers l'extérieur du pneumatique et la deuxième famille étant constituée par des couches de carcasse s'étendant, dans chaque bourrelet, de l'extérieur vers l'intérieur du pneumatique.

Préparation des compositions de caoutchouc

Les compositions utilisées dans les bandes de roulement de pneumatique d'avion de l'invention, peuvent être fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

La composition de la bande de roulement du pneumatique conforme à l'invention, peut être soit à l'état cru (avant réticulation ou vulcanisation), soit à l'état cuit (après réticulation ou vulcanisation), peut être un produit semi-fini qui peut être utilisé dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE RÉALISATION DE L'INVENTION

Mesures et tests utilisés

*Viscosité Mooney ou Plasticité Mooney (avant cuisson):*

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Plus la valeur de Mooney est basse, plus la viscosité avant cuisson est faible et meilleure est la processabilité de la composition.

*Essais de traction*

Ces essais permettent de déterminer les contraintes d'élasticité et les propriétés à la rupture; ceux effectués sur les mélanges cuits sont réalisés conformément à la norme AFNOR-NF-T46-002 de septembre 1988.

On mesure les allongements à la rupture (en %) à deux températures : à 23°C et à 100°C, dans les conditions normales d'hygrométrie (50% d'humidité relative), selon la norme française NF T 40-101 (décembre 1979), les contraintes à la rupture (en MPa) et l'énergie à la rupture peuvent également être mesurées, l'énergie à la rupture (Energie Rupture) étant le produit de la contrainte à la rupture et de l'allongement à la rupture. Les résultats sont données en base 100, c'est-à-dire qu'on exprime les valeurs par rapport à un témoin, dont l'allongement rupture est considéré comme la référence à 100.

*Déchirabilité*

Les indices de déchirabilité sont mesurés à deux températures : à 23°C et à 100°C. On détermine notamment la force à exercer pour obtenir la rupture (FRD, en N/mm) et on mesure la déformation à rupture (DRD, en %) sur une éprouvette de dimensions 10 x 85 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie) de l'éprouvette qui est le produit du FRD et DRD. Les résultats sont données en base 100, c'est-à-dire qu'on exprime les valeurs par rapport à un témoin, dont la déformation à rupture (DRD) est considéré comme la référence à 100.

Préparation des compositions et leurs propriétés

Les compositions C1 à C6, et les compositions témoin T1 et T2 dont la formulation en pce figure dans les tableaux 1 et 3 ont été préparées de la manière suivante.

On introduit dans un mélangeur interne (taux de remplissage final : environ 70% en volume), dont la température initiale de cuve est d'environ 80°C, successivement les élastomères, la charge renforçante, la résine hydrocarbonée ainsi que les divers autres ingrédients à l'exception du système de vulcanisation. On conduit alors un travail thermomécanique (phase non productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 70°C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement de pneumatique avion.

Exemples

Ces exemples ont pour but de montrer l'influence de l'incorporation de la résine hydrocarbonée spécifique de l'invention dans des compositions de bande de roulement de pneumatiques d'avion sur le compromis de performance entre la résistance à la coupure et la processabilité. Deux types de matrices élastomères ont été testés.

Les tableaux 1 et 3 présentent l'ensemble des compositions testées tandis que les tableaux 2 et 4 montrent les résultats obtenus.

T1 et T2 sont des compositions témoins. Les compositions C1 à C6 sont conformes à l'invention.

Les résultats de performance en allongement rupture à 23°C et à 100°C sont exprimés en pourcentage base 100 par rapport à la composition témoin, de même pour les résultats de performance en résistance à la déchirabilité à 23°C et à 100°C. La processabilité est représentée par les valeurs de viscosité Mooney en unités Mooney.

L'ensemble des résultats montre que les performances en résistance à la coupure telle que représentée par les mesures d'allongement rupture et de déchirabilité, à la fois à 23°C et 100°C, sont très améliorées par l'invention. Dans le même temps, la viscosité Mooney est diminuée dans les compositions utiles à l'invention, permettant d'augmenter la productivité industrielle lors de la fabrication des pneumatiques d'avion.

Tableau 1

| Composition | T1 | C1 | C2 | C3 |
|---|---|---|---|---|
| NR(1) | 100 | 100 | 100 | 100 |
| Noir de carbone (2) | 47 | 47 | 47 | 47 |
| Résine hydrocarbonée (3) | 0 | 5 | 7,5 | 10 |
| Antioxydant (4) | 1,5 | 1,5 | 1,5 | 1,5 |
| Antiozonant (5) | 1 | 1 | 1 | 1 |
| Résine renforçante (6) | 1 | 1 | 1 | 1 |
| Durcisseur (7) | 1 | 1 | 1 | 1 |
| Acide stéarique | 2,5 | 2,5 | 2,5 | 2,5 |
| ZnO | 3 | 3 | 3 | 3 |
| Accélérateur (8) | 0,8 | 0,8 | 0,8 | 0,8 |
| Soufre | 1,5 | 1,5 | 1,5 | 1,5 |

(1) Caoutchouc naturel
(2) Noir de carbone de grade N115 selon la norme ASTM D-1765
(3) Résine hydrocarbonée DCPD/Aromatique «Nevroz 1420» de la société Neville Mn=913g/mol ; Mw=3540g/mol ; Ip=3,9, Tg=90°C. Protons Aromatiques : 3%, Protons éthyléniques : 5%, Protons Aliphatiques : 92%, comprenant également des en outre des unités provenant des dérivés du pin
(4) N-1,3-diméthylbutyl-N-phénylparaphénylènediamine « Santoflex 6-PPD » de la société Flexsys-Solutia
(5) Cire antiozone
(6) Résine renforçante Résorcinol de la société Sumitomo
(7) HMT Hexaméthylènetétramine de la société Evonik- Degussa
(8) N-cyclohexyl-2-benzothiazyle sulfénamide « Santocure CBS » de la société Flexsys-Solutia

Tableau 2

| Composition | T1 | C1 | C2 | C3 |
|---|---|---|---|---|
| Allongement rupture à 23°C (base 100) | 100 | 112 | 114 | 120 |
| Allongement rupture à 100°C (base 100) | 100 | 108 | 118 | 124 |

**EP 3 724 266 B1**

(suite)

| Composition | T1 | C1 | C2 | C3 |
|---|---|---|---|---|
| DRD à 23°C (base 100) | 100 | 117 | 135 | 146 |
| DRD à 100°C (base 100) | 100 | 173 | 173 | 199 |
| Viscosité Mooney (UM) | 86 | 78 | 76 | 73 |

Tableau 3

| Composition | T2 | C4 | C5 | C6 |
|---|---|---|---|---|
| NR(1) | 50 | 50 | 50 | 50 |
| SBR (9) | 50 | 50 | 50 | 50 |
| Noir de carbone (2) | 49 | 49 | 49 | 49 |
| Silice (10) | 5 | 5 | 5 | 5 |
| Agent de couplage (11) | 1 | 1 | 1 | 1 |
| Résine hydrocarbonée (3) | 0 | 5 | 7,5 | 10 |
| Antioxydant (4) | 1,5 | 1,5 | 1,5 | 1,5 |
| Antiozonant (5) | 1 | 1 | 1 | 1 |
| Acide stéarique | 2,5 | 2,5 | 2,5 | 2,5 |
| ZnO | 3 | 3 | 3 | 3 |
| Accélérateur (8) | 0,8 | 0,8 | 0,8 | 0,8 |
| Soufre | 1,5 | 1,5 | 1,5 | 1,5 |
| (9) SBR solution fonctionnalisé étain avec 24 % de motifs polybutadiène 1,2 - 15.5 % de motifs styrène -Tg = -65°C <br> (10) Silice « Zeosil 1165 MP » de la société Solvay- Rhodia type « HDS » <br> (11) Silane | | | | |

Tableau 4

| Composition | T2 | C4 | C5 | C6 |
|---|---|---|---|---|
| Allongement rupture à 23°C (base 100) | 100 | 112 | 121 | 122 |
| Allongement rupture à 100°C (base 100) | 100 | 130 | 143 | 159 |
| DRD à 23°C (base 100) | 100 | 152 | 185 | 190 |
| DRD à 100°C (base 100) | 100 | 162 | 198 | 230 |
| Viscosité Mooney (UM) | 94 | 89 | 87 | 87 |

**Revendications**

1. Pneumatique d'avion dont la bande de roulement comprend une composition à base d'au moins :

- une matrice élastomérique comprenant de 20 à 100 pce d'élastomère isoprénique et de 0 à 80 pce d'un copolymère de butadiène et de styrène ;
- une charge renforçante comprenant majoritairement du noir de carbone ;
- de 1 à 30 pce d'au moins une résine hydrocarbonée majoritairement composée d'unités issues de monomères aromatiques et cycloaliphatiques, présentant un taux de proton aromatique compris entre 0 et 12%, un taux de proton éthylénique supérieur à 3%, une masse moyenne moléculaire en nombre supérieure à 500 g/mol et un indice de polymolécularité supérieur à 2;

- un système de réticulation.

**2.** Pneumatique selon la revendication 1, dans lequel l'élastomère isoprénique est choisi dans le groupe comprenant le caoutchouc naturel, le polyisoprène synthétique et leur mélange.

**3.** Pneumatique selon l'une quelconque des revendications précédentes, dans lequel le copolymère de butadiène et de styrène est fonctionnalisé à l'étain.

**4.** Pneumatique selon l'une quelconque des revendications précédentes, dans lequel le copolymère de butadiène et de styrène présente un taux de styrène compris dans un domaine allant de 5 à 25%, de préférence de 5 à 20%, de préférence encore de 10 à 19%.

**5.** Pneumatique selon l'une quelconque des revendications précédentes, dans lequel la charge renforçante comprend majoritairement du noir de carbone présentant une surface spécifique supérieure à 80m$^2$/g, de préférence supérieure à 100m$^2$/g.

**6.** Pneumatique selon l'une quelconque des revendications précédentes, dans lequel la quantité de noir de carbone est comprise dans un domaine allant de 20 à 100 pce, de préférence de 30 à 70 pce.

**7.** Pneumatique selon l'une quelconque des revendications précédentes, dans lequel la résine hydrocarbonée majoritairement composée d'unités issues de monomères aromatiques et cycloaliphatiques est telle que les monomères cycloaliphatiques sont choisis dans le groupe constitué par le cyclopentadiène, le dicyclopentadiène, le méthylcyclopentadiène et leurs mélanges, et les monomères aromatiques sont choisis dans le groupe constitué par le styrène, l'alpha-méthyl styrène, le vinyle toluène, l'indène et leurs mélanges.

**8.** Pneumatique selon l'une quelconque des revendications précédentes, dans lequel la résine hydrocarbonée majoritairement composée d'unités issues de monomères aromatiques et cycloaliphatiques présente un taux de proton aromatique compris dans un domaine allant de 1 à 10%, de préférence de 2 à 7%.

**9.** Pneumatique selon l'une quelconque des revendications précédentes, dans lequel la résine hydrocarbonée majoritairement composée d'unités issues de monomères aromatiques et cycloaliphatiques présente une température de transition vitreuse comprise dans un domaine allant de 30°C à 150°C, de préférence de 30 à 120°C.

**10.** Pneumatique selon l'une quelconque des revendications précédentes, dans lequel la résine hydrocarbonée majoritairement composée d'unités issues de monomères aromatiques et cycloaliphatiques présente une masse moléculaire moyenne Mn comprise dans un domaine allant de 500 g/mol à 1500g/mol et de préférence de 500 à 1000g/mol.

**11.** Pneumatique selon l'une quelconque des revendications précédentes, dans lequel la résine hydrocarbonée majoritairement composée d'unités issues de monomères aromatiques et cycloaliphatiques présente un indice de polymolécularité compris dans un domaine allant de 2 à 5, préférentiellement de 3 à 4,5.

**12.** Pneumatique selon l'une quelconque des revendications précédentes, dans lequel la résine hydrocarbonée majoritairement composée d'unités issues de monomères aromatiques et cycloaliphatiques, comprend en outre des unités provenant des dérivés du pin, préférentiellement choisies dans le groupe constitué par l'alphapinène, le betapinène, la colophane, la térébenthine, le tallol et leurs mélanges.

**13.** Pneumatique selon l'une quelconque des revendications précédentes, dans lequel le nombre de nappes carcasse est compris dans un domaine allant de 2 à 12, de préférence de 5 à 10.

**14.** Pneumatique selon l'une quelconque des revendications précédentes, dont la dimension est supérieure ou égale à 18 pouces, de préférence comprise dans un domaine allant de 20 à 23 pouces.

**Patentansprüche**

**1.** Flugzeugreifen, dessen Lauffläche eine Zusammensetzung auf Basis von mindestens

- einer elastomeren Matrix, umfassend 20 bis 100 phe Isoprenelastomer und 0 bis 80 phe eines Copolymers von Butadien und Styrol;
- einem verstärkenden Füllstoff, der hauptsächlich Ruß umfasst;
- 1 bis 30 phe mindestens eines Kohlenwasserstoffharzes, das hauptsächlich aus Einheiten besteht, die von aromatischen und cycloaliphatischen Monomeren stammen, mit einem Gehalt an aromatischen Protonen zwischen 0 und 12 %, einem Gehalt an ethylenischen Protonen von mehr als 3 %, einer zahlenmittleren Molmasse von mehr als 500 g/mol und einem Polymolekularitätsindex von mehr als 2;
- einem Vernetzungssystem

umfasst.

2. Reifen nach Anspruch 1, wobei das Isoprenelastomer aus der Gruppe bestehend aus Naturkautschuk, synthetischem Polyisopren und einer Mischung davon ausgewählt ist.

3. Reifen nach einem der vorhergehenden Ansprüche, wobei das Copolymer von Butadien und Styrol mit Zinn funktionalisiert ist.

4. Reifen nach einem der vorhergehenden Ansprüche, wobei das Copolymer von Butadien und Styrol einen Styrolgehalt in einem Bereich von 5 bis 25 %, vorzugsweise von 5 bis 20 %, noch weiter bevorzugt von 10 bis 19 %, aufweist.

5. Reifen nach einem der vorhergehenden Ansprüche, wobei der verstärkende Füllstoff hauptsächlich Ruß mit einer spezifischen Oberfläche von mehr als 80 m$^2$/g, vorzugsweise mehr als 100 m$^2$/g, umfasst.

6. Reifen nach einem der vorhergehenden Ansprüche, wobei die Rußmenge in einem Bereich von 20 bis 100 phe, vorzugsweise von 30 bis 70 phe, liegt.

7. Reifen nach einem der vorhergehenden Ansprüche, wobei das Kohlenwasserstoffharz, das hauptsächlich aus Einheiten besteht, die von aromatischen und cycloaliphatischen Monomeren stammen, derart beschaffen ist, dass die cycloaliphatischen Monomere aus der Gruppe bestehend aus Cyclopentadien, Dicyclopentadien, Methylcyclopentadien und Mischungen davon ausgewählt sind und die aromatischen Monomere aus der Gruppe bestehend aus Styrol, Alpha-Methylstyrol, Vinyltoluol, Inden und Mischungen davon ausgewählt sind.

8. Reifen nach einem der vorhergehenden Ansprüche, wobei das Kohlenwasserstoffharz, das hauptsächlich aus Einheiten besteht, die von aromatischen und cycloaliphatischen Monomeren stammen, einen Gehalt an aromatischen Protonen in einem Bereich von 1 bis 10 %, vorzugsweise 2 bis 7 %, aufweist.

9. Reifen nach einem der vorhergehenden Ansprüche, wobei das Kohlenwasserstoffharz, das hauptsächlich aus Einheiten besteht, die von aromatischen und cycloaliphatischen Monomeren stammen, eine Glasübergangstemperatur in einem Bereich von 30 °C bis 150 °C, vorzugsweise von 30 bis 120 °C, aufweist.

10. Reifen nach einem der vorhergehenden Ansprüche, wobei das Kohlenwasserstoffharz, das hauptsächlich aus Einheiten besteht, die von aromatischen und cycloaliphatischen Monomeren stammen, eine mittlere Molmasse Mn in einem Bereich von 500 g/mol bis 1500 g/mol und vorzugsweise von 500 bis 1000 g/mol aufweist.

11. Reifen nach einem der vorhergehenden Ansprüche, wobei das Kohlenwasserstoffharz, das hauptsächlich aus Einheiten besteht, die von aromatischen und cycloaliphatischen Monomeren stammen, einen Polymolekularitätsindex in einem Bereich von 2 bis 5, vorzugsweise von 3 bis 4,5, aufweist.

12. Reifen nach einem der vorhergehenden Ansprüche, wobei das Kohlenwasserstoffharz, das hauptsächlich aus Einheiten besteht, die von aromatischen und cycloaliphatischen Monomeren stammen, außerdem Einheiten umfasst, die von Pinienderivaten stammen, die vorzugsweise aus der Gruppe bestehend aus alpha-Pinen, beta-Pinen, Kolophan, Terebenthin, Tallöl und Mischungen davon ausgewählt sind.

13. Reifen nach einem der vorhergehenden Ansprüche, wobei die Karkasslagenzahl in einem Bereich von 2 bis 12, vorzugsweise von 5 bis 10, liegt.

14. Reifen nach einem der vorhergehenden Ansprüche, dessen Abmessung größer oder gleich 18 Zoll ist und vorzugsweise in einem Bereich von 20 bis 23 Zoll liegt.

**Claims**

1. Aircraft tyre whose tread comprises a composition based on at least:

    - an elastomeric matrix comprising from 20 to 100 phr of isoprene elastomer and from 0 to 80 phr of a copolymer of butadiene and styrene;
    - a reinforcing filler predominantly comprising carbon black;
    - from 1 to 30 phr of at least one hydrocarbon resin predominantly composed of units derived from aromatic and cycloaliphatic monomers, and having a content of aromatic protons of between 0% and 12%, a content of ethylenic protons of greater than 3%, a number-average molecular mass of greater than 500g/mol and a polydispersity index of greater than 2;
    - a crosslinking system.

2. Tyre according to Claim 1, in which the isoprene elastomer is chosen from the group comprising natural rubber, synthetic polyisoprene and a mixture thereof.

3. Tyre according to any one of the preceding claims, in which the copolymer of butadiene and styrene is functionalized with tin.

4. Tyre according to any one of the preceding claims, in which the copolymer of butadiene and styrene has a styrene content within a range extending from 5% to 25%, preferably from 5% to 20%, more preferably from 10% to 19%.

5. Tyre according to any one of the preceding claims, in which the reinforcing filler predominantly comprises carbon black with a specific surface area of greater than 80 $m^2/g$, preferably greater than 100 $m^2/g$.

6. Tyre according to any one of the preceding claims, in which the amount of carbon black is within a range extending from 20 to 100 phr, preferably from 30 to 70 phr.

7. Tyre according to any one of the preceding claims, in which the hydrocarbon resin predominantly composed of units derived from aromatic and cycloaliphatic monomers is such that the cycloaliphatic monomers are chosen from the group constituted by cyclopentadiene, dicyclopentadiene, methylcyclopentadiene and mixtures thereof, and the aromatic monomers are chosen from the group constituted by styrene, $\alpha$-methylstyrene, vinyltoluene, indene and mixtures thereof.

8. Tyre according to any one of the preceding claims, in which the hydrocarbon resin predominantly composed of units derived from aromatic and cycloaliphatic monomers has a content of aromatic protons within a range extending from 1% to 10%, preferably from 2% to 7%.

9. Tyre according to any one of the preceding claims, in which the hydrocarbon resin predominantly composed of units derived from aromatic and cycloaliphatic monomers has a glass transition temperature within a range extending from 30°C to 150°C, preferably from 30 to 120°C.

10. Tyre according to any one of the preceding claims, in which the hydrocarbon resin predominantly composed of units derived from aromatic and cycloaliphatic monomers has an average molecular mass Mn within a range extending from 500 g/mol to 1500 g/mol and preferably from 500 to 1000 g/mol.

11. Tyre according to any one of the preceding claims, in which the hydrocarbon resin predominantly composed of units derived from aromatic and cycloaliphatic monomers has a polydispersity index within a range extending from 2 to 5, preferentially from 3 to 4.5.

12. Tyre according to any one of the preceding claims, in which the hydrocarbon-based resin predominantly composed of units derived from aromatic and cycloaliphatic monomers also comprises units originating from pine derivatives, preferentially chosen from the group consisting of alpha-pinene, beta-pinene, rosin, turpentine and tall oil, and mixtures thereof.

13. Tyre according to any one of the preceding claims, in which the number of carcass plies is within a range extending from 2 to 12, preferably from 5 to 10.

14. Tyre according to any one of the preceding claims, the size of which is greater than or equal to 18 inches, preferably within a range extending from 20 to 23 inches.

## RÉFÉRENCES CITÉES DANS LA DESCRIPTION

**Documents brevets cités dans la description**

- WO 2017017123 A
- WO 2011042507 A
- US 3393182 A
- WO 9736724 A
- WO 9916600 A
- WO 2006069792 A
- WO 2006069793 A
- WO 0316837 A

**Littérature non-brevet citée dans la description**

- Rubber Tires and Mechanical Goods. **R. MILDENBERG ; M. ZANDER ; G. COLLIN.** Hydrocarbon Resins. VCH, 1997